Europäisches Patentamt

European Patent Office

Office européen des brevets

(11) Publication number: **0 501 352 A2**

# EUROPEAN PATENT APPLICATION

(21) Application number: **92102999.7**

(22) Date of filing: **22.02.92**

(51) Int. Cl.5: **D01F 6/22**, D01F 6/56, C04B 16/06

(30) Priority: **28.02.91 JP 55716/91**

(43) Date of publication of application:
**02.09.92 Bulletin 92/36**

(84) Designated Contracting States:
**AT BE CH DE ES FR GB IT LI NL SE**

(71) Applicant: **IDEMITSU KOSAN COMPANY LIMITED**
**1-1, Marunouchi 3-chome Chiyoda-ku**
**Tokyo(JP)**

(72) Inventor: **Yamasaki, Komei**
**1660, Kamiizumi**
**Sodegaura-shi, Chiba-ken(JP)**

(74) Representative: **Türk, Dietmar, Dr. rer. nat. et al**
**Türk, Gille + Hrabal Patentanwälte**
**Brucknerstrasse 20**
**W-4000 Düsseldorf 13(DE)**

(54) Fibrous reinforcing molding and building material.

(57) There are disclosed a fibrous reinforcing molding comprising a styrenic polymer with a high degree of syndiotactic configuration having a crystallinity of at least 30% and a birefringence index of at least $20 \times 10^{-3}$ in absolute value and a building material comprising the aforesaid fibrous reinforcing molding. The above fibrous molding is excellent in physical properties such as tensile strength, modulus of elasticity and retention rate of such properties after hot alkali treatment and useful as the alternative reinforcing material for asbestos without causing pollution problem.

## BACKGROUND OF THE INVENTION

### 1. Field of the Invention

The present invention relates to a fibrous reinforcing molding and a building material. More particularly, it pertains to a fibrous molding useful as reinforcing material and a building material comprising the same.

### 2. Description of the Related Arts

There has heretofore been used asbestos as reinforcing material for building. Being a fiber having a specific surface area of several thousands square centimeters per gram or more, asbestos well adsorbs the powders of raw materials for silicate and lime that are the raw materials of calcium silicate without allowing the raw material to run out in the dehydration step of building material. In addition, asbestos plays a significant role in the production process of building material in that it enables the production of calcium silicate by virtue of its reasonable freeness and it is not deteriorated even when it coexists with alkaline calcium hydroxide in the steam-heat drying step because of its high alkali resistance. Moreover, since asbestos is a bulky fiber having a high strength and a strong affinity for calcium silicate, it provides calcium silicate boards with the various excellent performance as described above.

However, it has become difficult to assure the requirement of asbestos because of its leap in the price due to sudden increase in the international demand and the exhaustion of asbestos resources. In addition to the above, asbestos is pointed out as a substance involving a fear of cancerogenicity from the viewpoint of industrial enviroment and sanitation, and the use thereof as a raw material for industrial products has been restricted. Under such circumstances, the development of an alternative material for asbestos is urgently necessitated.

As alternative materials for asbestos, the fiber comprising a thermoplastic resin, polyethylene terephthalate (PET), polyamide (PA) or the like is taken into consideration. These fibers, however, are liable to deterioration in a hot alkaline atmosphere in the steam-heat drying step. Likewise, the fiber comprising polyethylene (PE), polypropylene (PP), Vinylon or the like can not withstand the temperature in the above-mentioned step. Polyimide fiber is expensive and the commercial use thereof is difficult. Glass fiber is generally poor in alkali resistance. On the other hand, the glass fiber improved in alkali resistance suffers the disadvantage that it is poor in flexibility because of its high rigidity and also in affinity for other raw materials owing to the usually smooth surface thereof. Although syndiotactic polystyrenic polymer is excellent in resistances to heat, acid and alkali, the fiber made therefrom suffers the drawback that it becomes brittle owing to the thermal shrinkage thereof due to a temperature of 150°C or higher in the steam heating step of concrete or calcium silicate when used as reinforcing material therefor.

In view of the above, intensive research and investigation were made by the present inventor on the development of an alternative material for asbestos capable of withstanding hot alkaline atmosphere in the steam-heat drying step and exhibiting prominent affinity for other raw materials. As a result, it has been found that a fibrous molding comprising a syndiotactic polystyrenic polymer having a specific crystallinity can solve the above-described problems by virtue of its lessened thermal shrinkage and decrease in strength due to heat. The present invention has been accomplished on the basis of the foregoing finding and information.

## SUMMARY OF THE INVENTION

It is a general object of the present invention to provide a fibrous reinforcing material for building which is free from environmental pollution problem and capable of taking the place of asbestos.

It is another object of the present invention to provide a fibrous reinforcing material for building comprising a syndiotactic polystyrenic polymer having a specific crystallinity improved in thermal shrinkage and decrease in strength.

It is still another object of the present invention to provide a building material reinforced with a fibrous molding comprising a syndiotactic polystyrenic polymer improved in thermal shrinkage and decrease in strength.

Other objects of the present invention will be obvious from the text of the Specification hereinafter disclosed.

## DESCRIPTION OF PREFERRED EMBODIMENTS

The fibrous reinforcing molding according to the present invention comprises a styrenic polymer with a high degree of syndiotactic configuration having a crystallinity of at least 30% and a birefringence index of at least $20 \times 10^{-3}$ in absolute value. Here, the styrenic polymer having a high degree of syndiotactic configuration means that its stereochemical structure is of high degree of syndiotactic configuration, i.e. the stereostructure in which phenyl groups or substituted phenyl groups as side chains are located alternately at opposite directions relative to the main chain consisting of carbon-carbon bonds. Tacticity is quantitatively determined by the nuclear magnetic resonance method ($^{13}$C-NMR method) using carbon isotope. The tacticity as determined by the $^{13}$C-NMR method can be indicated in terms of proportions of structural units continuously connected to each other, i.e., a diad in which two structural units are connected to each other, a triad in which three structural units are connected to each other, a tetrad in which four structural units are connected to each other and a pentad in which five structural units are connected to each other. "The styrenic polymers having such a high degree of syndiotactic configuration" as mentioned in the present invention usually means polystyrene, poly(alkylstyrene), poly(halogenated styrene), poly(halogenated alkylstyrene), poly(alkoxystyrene), poly(vinyl benzoate), hydrogenated polymers thereof, the mixtures thereof, and copolymers containing the above polymers as main components, having such a syndiotacticity as determined by the above-mentioned method that the proportion of racemic diad is at least 75%, preferably at least 85%, or the proportion of racemic pentad is at least 30%, preferably at least 50%. The poly(alkylstyrene) include poly(methylstyrene), poly(ethylstyrene), poly(butylstyrene), poly(phenylstyrene), poly(vinylnaphthalene) and poly(vinylstyrene). Poly(halogenated styrene) include poly(chlororstyrene), poly(bromostyrene), and poly(fluorostyrene). Poly(halogenated alkylstyrene) include poly(chloromethylstyrene). Poly(alkoxystyrene) include poly(methoxystyrene).

Moreover, the comonomers that are usable in the aforementioned styrenic copolymers are exemplified by, in addition to the above-mentioned monomers usable in the styrenic polymers, olefin monomer such as ethylene, propylene, butene, hexene and octene; diolefin monomer such as butadiene and isoprene; cyclic olefin monomer; cyclic diolefin monomer; and polar vinyl monomer usch as methyl methacrylate, maleic anhydride and acrylonitrile.

The particularly desirable styrenic polymers are polystyrene, poly(alkylstyrene), hydrogenated polystyrene and the copolymers containing the structural units thereof.

The styrenic polymer having a high degree of syndiotactic configuration to be used in the present invention should have a crystallininy of at least 30%, desirably at least 35%, more desirably at least 38%. However, a higher crystallinity alone is not sufficient to exhibit the performance. It is necessary that the fiber has a specific degree of orientation as well as the above-mentioned crystallinity at the same time. As an index of degree of orientation, birefringence index is generally used. The styrenic polymer to be used in the present invention has a birefringence index of at least $20 \times 10^{-3}$, desirably at least $25 \times 10^{-3}$, more desirably at least $30 \times 10^{-3}$ each in absolute value. A crystallinity of less than 30% causes remarkable shrinkage of the fiber due to heat release during steam-heat drying resulting in the embrittlement of the product. A birefringence index of less than $20 \times 10^{-3}$ in absolute value embrittles a fiber even if the crystallinity of the polymer is 30% or more.

The molecular weight of the styrenic polymer to be used in the present invention is desirably 10,000 to 1,000,000, particularly desirably 50,000 to 800,000 in terms of the weight-average molecular weight. The molecular-weight distribution, that is the broadening of molecular weight of the styrenic polymer is not limited, but may be in a wide range. However, the ratio of weight-average molecular weight to number-average molecular weight is preferably 1.8 to 10.

The styrenic polymer having such syndiotactic configuration can be produced by polymerizing a styrenic monomer, that is, the monomer corresponding to the aforestated styrenic polymer by the use of a titanium compound and a condensation product of water and a tolylalkyl aluminum each as a catalyst (refer to Japanese Patent Application Laid-Open No. 187708/1987). The poly(halogenated alkylstyrene) and hydrogenated polymer thereof can be obtained by the processes disclosed in Japanese Patent Application Laid-Open Nos. 46912/1989 and 178505/1989, respectively.

The fibrous reinforcing molding according to the present invention is the styrenic polymer formed into fibrous molding. The shape of the molding is not specifically limited but may be miscellaneous according to the purpose of use. From the viewpoint of reinforcing, handling in manufacture or processing, however, a fiber having 1 to 100 mm length and 1 to 500 $\mu$m diameter is employed. A fiber length less than 1 mm fails to attain a sufficient strength as the reinforcing material, whereas that exceeding 100 mm worsens the dispersibility of fiber in the course of manufacture. Accordingly, a fiber length of 3 to 50 mm is preferable. The cross-sectional shape of the fiber is not specifically limited but may be the generally known shape such as circle, ellipse and rectangle. The average diameter of the fiber, which is represented by the diameter of the circle having an area same as the cross-sectional area of the fiber, is not specifically limited but may be suitably selected in the preferably range of 1 to 500 mm.

The fiber to be used in the present invention may have smooth surfaces or may be the one equipped with unevenness by a suitable method. In order to enhance the hydrophilic property of the fiber, a hydrophilic group may be given to the surface of the fiber. The useful examples of such hydrophilic group include sulfonic group or salts thereof, carboxylic group or salts thereof, hydroxyl group or salt thereof, ammonium salt, halogen, nitro group, phosphoric group, nitrile group, etc. Such hydrophilic groups may be given by means of various known methods such as dipping method. By improving the hydrophilic property of the fiber, the critical surface tension thereof is increased to 35 dyne/cm or higher, preferably 40 dyne/cm or higher.

The fiber to be used in the present invention may be linear or crimpy. The used of a fiber having a crystallinity of at least 30% and a birefringence index of at least $20 \times 10^{-3}$ in absolute value causes crimpy fiber during steam-heat drying, thus enabling the adhesion between the fiber and matrix to be improved. Heat setting of the fiber may be performed or omitted and, in the case of heat setting, it may be under the condition of tension or moderate looseness. The degree of looseness under which the heat setting is effected is preferably limited to 20% or less to prevent the physical properties of the fiber from being deteriorated.

The heat setting temperature is not lower than the glass transition point of the syndiotactic styrenic polymer, not higher than the melting point thereof and specifically not lower than 100°C, desirably 150°C or higher, more desirably 200°C or higher without exceeding the melting point. Heat setting time is not specifically limited but preferably from 0.5 second to less than 30 minutes.

The above-mentioned syndiotactic styrenic polymer in fibrous form may be produced by any of various non-limitative processes, for example, by melt spinning process such as staple fiber process, spun bonding process or melt blown process. In addition, a fiber of sheath and core structure may be produced with syndiotactic styrenic polymer as the sheath and a thermoplastic resin other than the above as the core.

In the production of the syndiotactic styrenic polymer in fibrous form, a thermoplastic resin may be blended therein within the extent that does not impair the heat and alkali resistances. A wide diversity of such thermoplastic resins are taken into consideration and enumerated by styrenic polymer such as atactic polystyrene, isotactic polystyrene, AS resin and ABS resin; polyester resin such as polyethylene terephthalate(PET) and polybutylene terephthalate (PBT); polycarbonate resin; polyphenylene sulfide resin (PPS); polyamide resin such as nylon 6, nylon 6•6 and nylon 4•6; polyether resin such as polyphenylene oxide, polysulfone and polyether sulfone; acrylic resin such as polyacrylic acid, polyacrylic ester and polymethyl methacrylate; polyolefin resin such as polyethylene, polypropylene, polybutene, poly(4-methylpentene-1), ethylene/propylene copolymer, ethylene/acrylic acid copolymer, ethylene/vinyl alcohol copolymer and ethylene/vinyl acetate copolymer; halogenated vinyl polymer such as polyvinyl chloride, polyvinylidene chloride and polyvinylidene fluoride; and polyoxymethylene, polyvinyl alcohol resin and derivatives thereof.

Of the aforestated thermoplastic resins, PPS and poly(2,6-dimethyl-1,4-phenylene oxide) or modified product thereof are preferably used as the resins that do not deteriorate heat and alkali resistances of the fiber.

It is possible to form a fibrous molding having a rectangular cross section by producing flat yarn followed by fine fibrillation. The fibrous molding manufactured by the fine fibrillation technique is preferably a linear texture, but also preferable is the crimpled one as well. In this case, the draw ratio for uniaxial orientation is 3 or more, desirably 3.5 or more. Thus, a high draw ratio is preferable with respect to strength and easiness in fibrillation.

For the purpose of enhancing fire resistance of the fiber, a syndiotactic styrenic polymer incorporated with a flame retardant or flame retardant aid may be employed.

The fibrous materials of the present invention can be used as the reinforcing materials for calcium silicate plates, slates, gypsam boads, gypsam slag plates, cement materials, and so forth. For examples, the syndiotactic styrenic polymer in fibrous form according to the present invention which is obtainable as described hereinbefore is excellent in the dimensional stability at high temperature, free from shrinkage in the steam-heat drying and excellent in reinforcing property, and therefore, can afford the objective building material by the conventional method wherein the polymer is dispersed in calcium silicate slurry. The loading of the foregoing syndiotactic styrenic polymer in fibrous form should be 0.1 to 15% by weight based on the total weight of the building material. A loading less than 0.1 % by weight fails to achieve sufficient reinforcing effect, whereas that exceeding 15% by weight worsens the fire resistance.

The above-mentioned calcium silicate slurry is produced by the usual process in which raw materials of silicate and lime are subjected to hydrothermal reaction. As the raw material of silicate, there are used, for example, silica stone, diatomaceous earth, shirasu, ferrosilicon dust, silicon dust, etc. As the raw material of lime, there are used, for example, slaked lime, quick lime, calcium carbide sludge, cement, etc. The aforementioned calcium silicate is preferably a crystalline one which is separately produced in advance by hydrothermal synthesis of raw materials of silicate and lime in an autoclave. In particular, the primary component of the clcium silicate is preferably xonotlite crystal, torbernite crystal or mixed crystal thereof. The calcium silicate slurry may contain the raw materials of silicate and lime together with calcium silicate.

The compounding ratio of the calcium silicate slurry as solid content is preferably in the range of 10 to 30% by weight based on the solid content of the total raw materials. A compounding ratio of less than 10% is not suffficient to improve the properties in the production process and overall performance of the product, whereas that exceeding 30% is unacceptable because it extremely worsens the freeness, thus disenabling the manufacture.

In order to enhance the reinforcing effect, the calcium silicate slurry may be incorporated with milled fiber such as glass milled fiber and carbon milled fiber; short fiber such as fibrous wollastonite, sepiolite, xonotlite, potassium titanate, ellestadite and gypsum fiber; balloon-like material such as glass balloon, fly ash and shirasu balloon; flaky matter such as mica and graphite; or others such as calcium carbonate, clay, talc and white carbon.

In the building material according to the present invention, the total sum of the calcium silicate, raw materials of silicate and lime and fibrous inorganic fiber should be 85 to 99.9% by weight. A total sum less than 85% worsens the fire resistance of the building material, whereas that more than 99.9% by weight fails to improve the strength thereof. When the reinforcing fibers of the present invention is used, even the building materials unnecessary to be exposed at high temperature, such as the gypsum boards, are improved in thermal resistance.

The fibrous reinforcing molding according to the present invention is not only excellent in strength and capable of withstanding hot alkaline atmosphere in steam-heat drying step without causing shrinkage, but also is prominent in the affinity for other materials, harmless to human body and free from the possibility of causing enviromental pollution, and therefore, is useful as the reinforcing material taking the place of the previous asbestos. Moreover, the building material incorporated with the above-mentioned molding as reinforcing material has a high strength and is expected to find a wide variety of effective use in building material such as building board, joint sheet and wall material, concrete, gypsum board, cement spraying material, lightweight concrete and the like.

In the following, the present invention will be described in more detail with reference to the non-limitative examples and comparative examples.

Reference Example

Preparation of styrenic polymer

(1) Preparation of contact product of trimethylaluminum and water--

In a 500 ml glass vessel which had been purged with argon were placed 17.8 g (71 mmol) of copper sulfate pentahydrate ($CuSO_4 \cdot 5H_2O$), 200 ml of toluene and 24 ml (250 mmol) of trimethylaluminum, which were then reacted at 40°C for 8 hours. Then, the solids were separated from the reaction mixture and the toluene was distilled away from the solution as obtained above under reduced pressure to produce 6.7 g of a contact product. The molecular weight thereof as determined by the freezing point depression method was 610.

(2) Preparation of styrenic polymer

In a 2 L (L = liter) reaction vessel were placed 1 L of purified styrene, the contact product as obtained in the above item (1) in an amount of 7.5 mmol as aluminum atom, 7.5 mmol of triisobutylaluminum and 0.038 mmol of pentamethylcyclopentadienyltitanium trimethoxide, which were then subjected to polymerization reaction at 90°C for 5 hours. After the completion of the reaction, the catalytic components were decomposed with a solution of sodium hydroxide in methanol and then the reaction product was washed with methanol repeatedly and dried to afford 466 g of polymer. As the result of analysis by gel permeation chromatography using 1,2,4-trichlorobenzene at 135°C as the solvent, the polymer had a weigh-average molecular weight of 290,000 and a ratio of weight-average molecular weight to number-average molecular weight of 2.72. It was confirmed that the polymer was syndiotactic polystyrene from the results of melting point measurement and $^{13}$C-NMR analysis.

Example 1

(a) Preparation of pellet

To 100 parts by weight of the syndiotactic polystyrene as obtained in the above Reference Example were added 0.1 part by weight of (2,6-di-tert-butyl-4-methylphenyl)pentaerythritol diphosphite (Produced by Adeka Argus Co., Ltd. under the tradename "PEP-36) and 0.1 part by weight of tetrakis [methylene-3-(3,5-di-tert-butyl-4-hydroxyphenyl)-propionate] methane (Produced by Japan Ciba-Geigy Corp. under the tradename "Irganox") each as an antioxidant, and the mixture thereof was melt extruded to provide pellet.

(b) Preparation of fiber

The pellet obtained in the above item (a) was extruded with an extruding machine equipped at the end thereof with a die having four spinnerets of 0.5 mm pore diameter at a die temperature of 310°C at a discharge rate of 1.875 g/min per pore and wound with a winding machine (Produced by Teijin Seiki Co., Ltd.) at a winding rate of 1500 m/min.

The fiber thus obtained had a fineness of 10 denier, a diameter of 40 $\mu$m, a crystallinity as determined by differential scanning calorimetry (DSC) of 41%, a modulus of elasticity of 55 g/denier and a strength of 1.5 g/denier.

(c) Strength retention test

The linear fiber obtained in the above item (b) was cut into small pieces each having a length of 300 mm and place in 800 ml of aqueous NaOH solution adjusted to pH 12.0 which had been put in a 1 L autoclave. Subsequently the autoclave was covered with a lid and heated to raise the internal temperature at 180°C, which was maintained four 10 hours at an internal pressure of 10 kg/cm$^2$. After cooling, the fiber was taken out from the autoclave. The length of cut fiber was about 170 mm due to crimp, restored to about 290 mm by hand stretching and elastically returned to 170 mm by releasing from hand.

The tensile strength of the fiber was measured before and after the above test and the strength retention rate was calculated by the following formula. The results are given in Table 1.

Strength retention rate = [Strength (or modulus of elasticity) after NaOh resistance test]/[Strength (or modulus of elasticity before NaOH resistance test] x 100%

The modulus of elasticity was 47 g/denier and the strength was 1.3 g/denier.

Example 2

The procedure in Example 1 was repeated except that the internal temperature was adjusted to 230°C at an internal pressure of 28 kg/cm$^2$ in item (c). The results are given in Table 1. The fiber was taken out from the autoclave after cooling. The length of the fiber was about 170 mm due to crimp, restored to about 290 mm by hand stretching and elastically returned to the original 170 mm by releasing from hand. The modulus of elasticity was 45 g/denier and the strength was 1.29 g/denier.

Comparative Example 1

The pellet as obtained in Example 1 (a) was extruded at a discharge rate of 0.4 g/min per pore and wound at a winding rate of 300 m/min. The fiber thus obtained had a fineness of 10 dinier, a diameter of 40 $\mu$m, a crystallinity of 18%, a modulus of elasticity of 25 g/denier and a strength of 0.62 g/denier.

The aforesaid fiber was tested in the same manner as in Example 1 (c) with the results given in Table 1. The fiber was taken out from the autoclave after cooling and tested for strength retention. The fiber was linear without any crimp and had a shrinked length of 154 mm, a modulus of elasticity of 16.3 g/denier and a strength of 0.1 g/denier.

Example 3

The fiber obtained in Example 1 (b) was fixed at both ends under tention and put in an autoclave at 250°C for 30 seconds to effect heat setting at a fixed fiber length. After heat setting, the fiber had a

6

crystallinity of 47%, a modulus of elasticity of 60 g/denier and a strength of 1.6 g/denier. The heat set fiber was cut into small pieces each having a length of 300 mm and tested in the same manner as in Example 1 (c) with the results given in Table 1. After cooling, the fiber was linear without any crimp and had a length of 295 mm, a modulus of elasticity of 55 g/denier and a strength of 1.44 g/denier.

Comparative Example 2

A long fiber of PET (10 denier) was tested in the same manner as in Example 1 (c) with the results given in Table 1. The fiber was partially disintegrated by the test without any original shape being observed.

Example 4

The pellet obtained in Example 1 (a) was extruded through a T-die of 200 mm in width set at 300°C and cooled with a chilling roll set at 70°C for the surface thereof to prepare a transparent original sheet of 30 $\mu$m in thickness. subsequently, the original sheet was uniaxially oriented at a draw ratio of 4.2 between a pair of rolls adjusted to 120°C. The oriented film thus obtained had a thickness of 7.5 $\mu$m and a tendency to be torn in the direction same as the machine direction. Thereafter, the film was fibrillated by the conventional method to prepare a fiber having a rectangular cross section of about 30 $\mu$m x 7.5 $\mu$m, a length of 300 mm, a modulus of elasticity of 41 g/denier and a strength of 1.1 g/denier. As the result of microscopic observation, the fiber surface had numerous unevenness presumed to have been formed in the course of fibrillation. The fiber was tested in the same manner as in Example 1 (c) with the results given in Table 1. The fiber had a modulus of elasticity of 34 g/denier and a strength of 0.94 g/denier.

Example 5

To 80 parts by weight of syndiotactic polystyrene obtained in Reference Example was added 20 parts by weight of poly(2,6-dimethyl-1,4-phenylene) ether (PPO). The composition was spun at a rate of 1700 m/min with the same apparatus as used in Example 1 (b). The fiber thus obtained had a diameter of 25 $\mu$m, a crystallinity of 35%, a modulus of elasticity of 45 g/denier and a strength of 1.3 g/denier, and was tested in the same manner as in Example 1 (c) with the results given in Table 1. After the test, the fiber showed a modulus of elasticity of 37 g/denier and a strength of 1.1 g/denier.

Table 1

| | Fiber diameter μm | Crystallinity % | Birefringence index in absolute value \|Δn\| | Retention rate after NaOH resistance test | | Crimp |
| | | | | Tensile strength % | Tensile modulus of elasticity % | |
|---|---|---|---|---|---|---|
| Example 1 | 40 | 41 | $43 \times 10^{-3}$ | 87 | 85 | yes |
| Example 2 | 40 | 41 | $43 \times 10^{-3}$ | 86 | 82 | yes |
| Comparative Example 1 | 40 | 18 | $18 \times 10^{-3}$ | 15 | 65 | no |
| Example 3 | 40 | 47 | $40 \times 10^{-3}$ | 90 | 92 | no |
| Comparative Example 2 | 38 | 42*1 | – | unmeasurable due to disintegration | | – |
| Example 4 | 8.5*2 | 45 | $38 \times 10^{-3}$ | 85 | 82 | yes |
| Example 5 | 25 | 35 | $35 \times 10^{-3}$ | 86 | 81 | yes |

*1 Calculated from density

*2 Radius of circle the area of which corresponds to cross-sectional area

### Example 6

The fiber obtained in Example 1 (b) was immersed in chlorosulfonic acid for 4 hours and then throughly washed with water. The existence of sulfonic group in the dried fiber was confirmed by infrared spectroscopic analysis of the fiber. Although the untreated fiber had a critical surface tension of 33 dyne/cm, the sulfonated fiber had a critical surface tension of 41 dyne/cm, indicating the improvement in hydrophilic property due to sulfonation as compared with the fiber not treated by sulfonation.

Examples 7 to 10

Each of the fibers obtained in Examples 1, 3, 4 and 6 was cut into small pieces of 10 mm in length and compounded with a fibrous wollastonite, calcium silicate slurry which had been previously prepared by hydrothermal synthesis, silica stone and slaked lime each in a compounding ratio based on solid content as shown in Table 2. the raw material mixture thus obtained was added to water with an amount of 10 times the weight of the mixture under stirring and mixing and incorporated with water at the time of making board so as to attain a slurry concentration of about 3% by weight. The slurry was formed into a crude board, which was subsequently placed in an autoclave, subjected to steam heating treatment for 10 hours at a saturated steam pressure of 10 kg/cm$^2$ and dried to afford the product. The physical properties of each product are given in Table 2.

Comparative Examples 3 and 4

The fiber obtained in Comparative Example 1 and PET fiber were cut into small pieces of 10 mm in length, which were treated in the same manner as in Example 7. The physical properties of each product are also given in Table 2.

Examples 11 and 12

The reinforcing fiber produced in Example 3 was used for the present purpose. The mixture of the composition ratio as described in Table 3 was mixed by a screw mixer, followed by the addition of 10 fold-water, and was further stirred and mixed. The slurry thus obtained was used to produce the gypsum boards at the molding pressure of 100 kg/m$^2$, and was dried at 120°C.

The physical properties of the gypsum boards thus produced are shown in Table 4, together with those of the gypsum boards after the treatment at 250°C for 30 minutes in an oven. The testing results of the thermal resistance are also described.

Comparative Examples 5 and 6

The reference fiber samples used for the comparative examples are the same as used for Example 11, excepting the use of the fiber prepared in Comparative Example 1 or the commercial fiber (Unichika vinylon), and the testing was also performed as in the manner of Example 11. The results are shown in Table 4.

Table 2

| | | Compounding proportion | | | | Flexural strength (kg/cm$^2$) (under normal condition) | |
| | Type of fiber used | Fibrous wollastonite | Silica stone | Slaked lime | Calcium-silicate crystal slurry | machine direction | transverse direction |
|---|---|---|---|---|---|---|---|
| Example 7 | Example 1 5% | 20% | 30% | 22% | 23% | 158 | 126 |
| Example 8 | Example 3 7% | 22% | 30% | 20% | 21% | 152 | 119 |
| Example 9 | Example 4 2% | 23% | 30% | 22% | 23% | 161 | 129 |
| Example 10 | Example 6 5% | 20% | 30% | 22% | 23% | 170 | 136 |
| Comparative Example 3 | Comparative Example 4 5% | 20% | 30% | 22% | 23% | 131 | 108 |
| Comparative Example 4 | PET 5% | 20% | 30% | 22% | 23% | 127 | 100 |

Table 3

| No. | reinforcing fibers (%) | gypsum (%) | pulp (%) | lime (%) | potassium citrate (%) |
|---|---|---|---|---|---|
| Example 11 | (Example 3) 2 | 90 | 3 | 4.5 | 0.5 |
| Example 12 | (Example 3) 10 | 85 | 0 | 4.5 | 0.5 |
| Comparative Example 5 | (Comparative Example 3) 2 | 90 | 3 | 4.5 | 0.5 |
| Comparative Example 6 | (Unichika Vinylon) 2 | 90 | 3 | 4.5 | 0.5 |

Table 4

| No. | Flexural Strength (normal condition) ($kg/cm^2$) | Impact Strength ($kgcm/cm^2$) | Flexural Strength after exposed at 250°C for 30 min. ($kg/cm^2$) |
|---|---|---|---|
| Example 11 | 150 | 15.2 | 150 |
| Example 12 | 145 | 15.6 | 150 |
| Comparative Example 5 | 140 | 14.8 | 125 |
| Comparative Example 6 | 155 | 15.2 | 130 |

## Claims

1. A fibrous reinforcing molding which comprises as the primary ingredient a styrenic polymer with a high degree of syndiotactic configuration having a crystallinity of at least 30% and a birefringence index of at least $20 \times 10^{-3}$ in terms of absolute value.

2. The fibrous reinforcing molding according to Claim 1, wherein the fibrous molding has a length of 1 to 100 mm and a diameter of 1 to 50 $\mu$m.

3. The fibrous reinforcing molding according to Claim 1, characterized by its being capable of causing crimp at a temperature not lower than the glass transition point of the styrenic polymer.

4. The fibrous reinforcing molding according to Claim 1, wherein the fibrous molding has a critical surface tension of at least 35 dyne/cm.

5. The fibrous reinforcing molding according to Claim 1, wherein the fibrous molding has a tensile modulus of elasticity of at least 35 g/denier, a tensile strength of at least 0.8 g/denier and retention rates of both tensile modulus of elasticity and tensile strength of at least 70% after NaOH resistance test at pH 12, 180 to 230°C for 10 hours.

6. The fibrous reinforcing molding according to Claim 1, further comprising a thermoplastic resin in addition to said styrenic polymer.

7. A building material comprising the fibrous reinforcing molding as claimed in Claim 1.

8. The building material according to Claim 7, wherein the fibrous molding has a length of 1 to 100 mm and a diameter of 1 to 50 $\mu$m.

9. The building material according to Claim 7, wherein the fibrous molding is capable of causing crimp at a temperature not lower than the glass transition point of the styrenic polymer.

10. The building material according to Claim 7, wherein the fibrous molding has a critical surface tension of at least 35 dyne/cm.

11. The building material according to Claim 7, wherein the fibrous molding has a tensile modulus of elasticity of at least 35 g/denier, a tensile strength of at least 0.8 g/denier and retention rates of both tensile modulus of elasticity and tensile strength of at least 70% after NaOH resistance test at pH 12, 180 to 230°C for 10 hours.

12. The building material according to Claim 7, wherein the fibrous molding further comprises a thermoplastic resin in addition to said styrenic polymer.

13. The building material according to Claim 7 which comprises 0.1 to 15%, by weight of the fibrous molding and 99.9 to 85% by weight of at least one member selected from the group consisting of calcium silicate, raw material of silicate, raw material of lime and fibrous inorganic fiber.

14. The building material according to Claim 7, wherein said calcium silicate is incorporated in an amount of 10 to 30% by weight of solid based on the weight of total solid in said building material.

15. The building material according to Claim 7, wherein said calcium silicate is in the state of crystal produced by hydrothermal synthesis of raw materials of silicate and lime.

16. The building material according to Claim 7, wherein said material comprises gypsum boards.

17. The building material according to Claim 16, comprising 0.1 to 15% by weight of the fibrous reinforcing molding.